# EUROPÄISCHE PATENTANMELDUNG

(11) **EP 2 517 918 A2**
(43) Veröffentlichungstag der Anmeldung: **31.10.2012**
(21) Anmeldenummer: 12156880.2
(22) Anmeldetag: 24.02.2012
(51) Int. Cl.: B60K 17/356, E01H 1/10

(54) **Wassergetriebenes Reinigungsfahrzeug**

(30) Priorität: 28.04.2011 DE 202011001005 U
(71) Anmelder: Grochowiak, Andreas, 48599 Gronau (DE); Thihatmer, Alfons, 48607 Ochtrup (DE)
(72) Erfinder: Grochowiak, Andreas, 48599 Gronau (DE); Thihatmer, Alfons, 48607 Ochtrup (DE)
(74) Vertreter: Habbel, Ludwig

(57) **Zusammenfassung**

Bei einem Reinigungsfahrzeug (1), mit einem Fahrmotor, einem durch den Fahrmotor angetriebenen Fahrwerk, und einer Reinigungseinrichtung (4), welche eine Reinigungsflüssigkeit auf eine zu reinigende Oberfläche aufbringt, schlägt die Erfindung vor, dass das Reinigungsfahrzeug eine elektronische Steuerung aufweist, welche einen Empfänger einer Fernsteuerung umfasst, wobei Fahr- und Reinigungsfunktionen des Reinigungsfahrzeugs mittels der Fernsteuerung und der fahrzeugseitigen elektronischen Steuerung beeinflussbar sind, und eine als Schlauchtrommel (6) bezeichnete Aufnahme für einen Schlauch (7) aufweist, wobei durch den Schlauch Wasser zu dem Reinigungsfahrzeug zugeführt ist, und wobei das Reinigungsfahrzeug einen mit dem Wasser betriebenen, als Wassermotor bezeichneten Hydraulikmotor aufweist, wobei der Wassermotor zum Antrieb des Fahrwerks dient und das dem Wassermotor zugeführte Wasser einen als ersten Wasserdruck bezeichneten Druck aufweist, und wobei das aus dem Wassermotor austretende Wasser als Reinigungsflüssigkeit zu der Reinigungseinrichtung geführt ist, wobei das Wasser stromabwärts von dem Wassermotor einen als zweiten Wasserdruck bezeichneten Druck aufweist, der niedriger ist als der erste Wasserdruck, der stromaufwärts von dem Wassermotor herrscht.

## Beschreibung

Die Erfindung betrifft ein Reinigungsfahrzeug nach dem Oberbegriff des Anspruchs 1.

Gattungsgemäße Reinigungsfahrzeuge sind beispielsweise aus dem Bereich der Straßenreinigung bekannt. Sie weisen einen Wassertank auf, in welchem die Reinigungsflüssigkeit mitgeführt wird, die dann über Sprühdüsen auf die zu reinigende Oberfläche aufgegeben wird, beispielsweise eine vom Reinigungsfahrzeug befahrene Straße. Der Antrieb des Reinigungsfahrzeugs erfolgt üblicherweise über ein Verbrennungsmotor, für dessen Betrieb ein eigener Energiespeicher in Form eines Kraftstofftanks vorgesehen ist. Wenn alternativ dazu das Reinigungsfahrzeug elektromotorisch verfahren wird, ist auch in diesem Fall für den Fahrmotor ein eigener Energiespeicher in Form einer Batterie, eines Akkumulators o. dgl. erforderlich. Die Steuerung des Reinigungsfahrzeugs erfolgt durch einen Fahrer, der in einer eigens vorgesehenen Fahrerkabine untergebracht ist.

Das Gewicht der bekannten Reinigungsfahrzeuge ist vergleichsweise hoch und liegt üblicherweise bei mehr als 1t. Zum Befahren von Dächern, und insbesondere von gläsernen Strukturen wie verglasten Hallendächern, Wintergärten u. dgl. sind derartige Reinigungsfahrzeuge nicht geeignet.

Der Erfindung liegt die Aufgabe zugrunde, ein gattungsgemäßes Reinigungsfahrzeug dahingehend zu verbessern, dass dieses möglichst leichtgewichtig ausgestaltet werden kann und eine Befahrbarkeit von ansonsten schlecht zugänglichen Flächen, wie beispielsweise Gebäudedächern, ermöglicht.

Diese Aufgabe wird durch ein Reinigungsfahrzeug mit den Merkmalen des Anspruchs 1 gelöst.

Die Erfindung schlägt mit anderen Worten erstens vor, das Reinigungsfahrzeug fernzusteuern, so dass das Gewicht des Fahrers ebenso entfällt wie das der für den Fahrer vorgesehenen Kabine und Bedienelemente. Die Fernsteuerung kann in Form einer Funkfernsteuerung ausgestaltet sein. Die Fahrzeugbewegungen können entweder vom Rand der zu reinigenden Fläche aus gesteuert werden, oder, insbesondere bei den erwähnten gläsernen Strukturen, durch Beobachtung des Fahrzeugs vom Gebäudeinneren her, durch die gläserne, vom Reinigungsfahrzeug befahrene Fläche hindurch.

Zweitens ist bei dem Reinigungsfahrzeug als einzige Zuleitung eine Schlauchleitung vorgesehen, die als Energiekette dient und dem Fahrzeug sowohl die für seinen Betrieb erforderliche Energie zuführt, als auch die für den Reinigungsbetrieb erforderliche Reinigungsflüssigkeit. Über den Schlauch wird die Flüssigkeit in Form von Wasser einem Hydraulikmotor zugeführt, der mit einem hydraulischen Fluid in Form von Wasser betrieben ist und insofern als Wassermotor bezeichnet wird. Der hier, also stromaufwärts von dem Wassermotor, herrschende Wasserdruck wird als erster Wasserdruck bezeichnet.

Das Wasser dient also zunächst zum Antrieb des Wassermotors. Nach der dadurch hervorgerufenen Druckdifferenz wird das Wasser mit dem verbleibenden, als zweiter Wasserdruck bezeichneten Druck zur Reinigungseinrichtung geführt, wo es in an sich bekannter Weise auf die zu reinigende Oberfläche aufgebracht wird, beispielsweise aus Sprühdüsen versprüht wird. Das Wasser dient also nach dem Antrieb des Wassermotors als Reinigungsflüssigkeit, so dass im Unterschied zu anderen hydraulischen Arbeitsgeräten, die mit einem im Kreislauf geführten Hydrauliköl betrieben werden, das vorgeschlagene Reinigungsfahrzeug in Art eines offenen Systems betrieben wird, indem das zunächst von außen zugeführte Wasser, nachdem es den Wassermotor angetrieben hat, auch wieder aus dem System gelangt und versprüht wird.

Dadurch, dass der Wasserschlauch als Energiekette genutzt wird, ist eine zweite Leitung zum Reinigungsfahrzeug nicht erforderlich, so dass beispielsweise keine elektrische Zuleitung vorgesehen sein muss, um das Fahrzeug anzutreiben. Auf diese Weise kann das Fahrzeug möglichst problemlos auf einer ansonsten schlecht zugänglichen Fläche betrieben werden, beispielsweise auf einer Dachfläche, wobei das Fahrzeug von außen in einiger Entfernung mittels der Fernsteuerung betrieben und gesteuert werden kann.

Der Wassermotor kann dazu genutzt werden, das Fahrwerk des Reinigungsfahrzeugs unmittelbar anzutreiben. Vorteilhaft jedoch kann vorgesehen sein, dass der Wassermotor für den indirekten Antrieb des Fahrmotors dient, indem er zunächst einen elektrischen Generator antreibt, so dass die dann geschaffene elektrische Energie für die Versorgung eines Elektromotors dient, der als Fahrmotor das Fahrwerk des Reinigungsfahrzeugs antreibt, wobei allerdings auch mehr als ein einziger Elektromotor vorgesehen sein kann. Durch die Verwendung eines elektrischen Fahrmotors lässt sich das Fahrzeug problemlos und präzise steuern, und zudem kann problemlos eine Entkopplung zwischen den Druck- bzw. Strömungsverhältnissen des Wassers und der Fahrgeschwindigkeit des Fahrzeugs geschaffen werden.

Weiterhin kann vorteilhaft die elektronische Steuerung für das Reinigungsfahrzeug mit der erzeugten elektrischen Energie versorgt werden, die durch das zugeführte Wasser bereitgestellt wird. Auf diese Weise kann ein elektrischer Energiespeicher entfallen bzw. als Pufferspeicher möglichst gering gehalten werden, so dass auf diese Weise das Fahrzeuggewicht ebenfalls möglichst gering gehalten werden kann.

Stromaufwärts von dem Wassermotor kann das Wasser vorzugsweise einen ersten Wasserdruck von wenigstens 80 bar aufweisen, beispielsweise einen Druck von etwa 120 bar, so dass dementsprechend der Schlauch als Hochdruckschlauch ausgestaltet ist, im Unterschied zu haushaltsüblichen Wasserschläuchen.

Vorteilhaft kann der Schlauch abgesehen von seiner ersten Aufgabe, nämlich dem Reinigungsfahrzeug die erforderliche Antriebsenergie für den Fahrbetrieb zuzuführen, und auch über seine zweite Aufgabe hinaus, nämlich die Wasserversorgung für die Reinigungseinrichtung des Reinigungsfahrzeuges sicherzustellen, auch noch zur Lösung einer dritten Aufgabe genutzt werden, nämlich als Absturzsicherung für das Fahrzeug dienen:

Wenn das Fahrzeug beispielsweise auf ein Gebäudedach aufgesetzt wird, kann der Schlauch auf dem Gebäudedach fixiert werden. Mit zunehmender Entfernung des Reinigungsfahrzeugs von dieser Fixierungsstelle wird der Schlauch zunehmend von der Schlauchaufnahme abgewickelt, die beispielsweise ähnlich einer herkömmlichen Schlauchtrommel ausgestaltet sein kann und jedenfalls im Rahmen des vorliegenden Vorschlages als Schlauchtrommel bezeichnet wird. Die Verbindung dieses Schlauchs innerhalb des Reinigungsfahrzeugs erfolgt nicht einfach im Sinne eines flüssigkeitsdichten und entsprechend druckfesten Anschlusses an ein Aggregat wie den Wassermotor, sondern der Schlauch ist an das Reinigungsfahrzeug im Sinne einer Zugentlastung angeschlossen, so dass auf den Schlauch einwirkende Zugkräfte am Fahrzeug sicher aufgenommen werden können.

Dabei ist sowohl die Zugentlastung als auch der Schlauch selbst derart ausgelegt, dass eine Zugkraft problemlos aufgenommen werden kann, wie sie aus dem Eigengewicht des Reinigungsfahrzeugs resultiert. Sollte das Reinigungsfahrzeug also über eine Kante des Gebäudedachs hinweg fahren und nach unten stürzen, so dient der Schlauch als Absturzsicherung, um den Sturz des Reinigungsfahrzeugs möglichst frühzeitig aufzufangen. Dazu ist an der Schlauchtrommel eine Auszugssicherung vorgesehen, die ähnlich wie bei Sicherheitsgurten von Personenfahrzeugen oder ähnlich wie eine Rolltorsicherung ausgestaltet sein kann und jedenfalls bei Erreichen einer vorbestimmten maximalen Abzugsgeschwindigkeit anspricht, falls der Schlauch mit einer derartigen Geschwindigkeit von der Schlauchtrommel abgezogen wird, und dann die Schlauchtrommel blockiert und das weitere Abwickeln des Schlauchs verhindert.

Vorteilhaft kann vorgesehen sein, dass die Reinigungseinrichtung abgesehen von den Sprühdüsen auch eine motorisch angetriebene bewegliche Bürste aufweist, so dass die Reinigungswirkung erheblich verbessert wird. Für den Antrieb der Bürste kann der stromabwärts vom Wassermotor verbleibende zweite Wasserdruck ausgenutzt werden, indem an dieser Stelle ebenfalls ein Wassermotor vorgesehen ist, welcher die Bürste unmittelbar antreibt, oder es kann auch für die Bürste ein elektrischer Antrieb vorgesehen sein, der beispielsweise von dem bereits erwähnten Generator mit elektrischer Energie versorgt wird.

Die Bürste kann drehbar angetrieben sein, mit einer liegenden oder aufrechten Drehachse, oder sie kann in einer oszillierenden, sozusagen schrubbenden Bewegung über die zu reinigende Oberfläche bewegt werden. Die als Borsten bezeichneten Elemente der Bürste können aus unterschiedlichen Materialien bestehen und unterschiedliche Querschnitte aufweisen, beispielsweise als kreisrunden Borsten aus Kunststoff oder als langgestreckte textile Lappen mit flachem Querschnitt ausgestaltet sein. In Anpassung an die jeweiligen Verschmutzungen und /oder an das zu reinigende Material kann vorgesehen sein, dass auswechselbare Bürsten an derselben Reinigungseinrichtung montiert werden können, oder dass auswechselbare Reinigungseinrichtungen an dem Reinigungsfahrzeug montiert werden können, deren Bürsten beispielsweise um unterschiedlich ausgerichtete Drehachsen oder in unterschiedlichen Bewegungsarten - wie drehend oder oszillierend - angetrieben sind.

Das Fahrwerk kann unmittelbar mit Rädern auf der zu reinigenden Oberfläche aufstehen. Das Fahrwerk kann jedoch vorzugsweise als Raupenfahrwerk ausgestaltet sein, so dass nicht unmittelbar die Räder selbst den Kontakt mit der zu reinigenden Oberfläche haben, sondern vielmehr Raupenbänder, die jeweils um wenigstens zwei Räder umlaufen. So kann auf jeder Fahrzeugseite vorzugsweise wenigstens eine Antriebsraupe vorgesehen ist, die ein solches Band aufweist. Dabei können beide Räder je Antriebsraupe angetrieben sein, jedoch kann zugunsten einer möglichst leichtgewichtigen Ausgestaltung des Reinigungsfahrzeugs vorgesehen sein, dass lediglich ein angetriebenes Rad pro Bandantrieb vorgesehen ist, d. h. pro Antriebsraupe des Reinigungsfahrzeugs. Zudem wird hierdurch eine exakte Synchronisation der beiden Räder einer Raupe nicht erforderlich, so dass die konstruktive Ausgestaltung des Reinigungsfahrzeugs vereinfacht wird und das Reinigungsfahrzeug wirtschaftlicher herstellbar ist.

Vorteilhaft können zwischen den Rädern und dem davon angetriebenen Band Bogenverzahnungen vorgesehen sein, so dass das Band automatisch auf den Rädern zentriert wird und bei leichten Abweichungen stets automatisch in eine definierte Position auf den Rädern zurückgeführt wird.

Unabhängig von der übrigen Ausgestaltung des Reinigungsfahrzeugs kann bei Reinigungsfahrzeugen, die auf glatten Flächen wie Glas fahren, die nachfolgend beschriebene vorteilhafte Ausgestaltung des Fahrwerks vorgesehen sein.

Die Räder oder Raupenbänder, mit denen das Reinigungsfahrzeug auf der zu reinigenden Oberfläche fährt, können vorteilhaft jeweils eine so genannte Lauffläche als die Schicht aufweisen, die mit der zu reinigenden Oberfläche in unmittelbaren Kontakt kommt. So ist ein mehrteiliger Aufbau eines Rades oder ein mehrschichtiger Aufbau eines Raupenbandes möglich, bei welchem unterschiedliche Radteile bzw. Bandschichten aus unterschiedlichen Werkstoffen bestehen und für ihre jeweilige Funktion unter technischen und wirtschaftlichen Gesichtspunkten optimal geeignet sind. So ergibt sich auch die Möglichkeit, die Lauffläche als Verschleißteil bzw. Verschleißschicht auswechselbar am übrigen Rad bzw. Raupenband anzuordnen, so dass mit geringem wirtschaftlichem Aufwand ein Rad bzw. eine Raupe stets wieder optimale Traktionseigenschaften durch das Auswechseln einer verbrauchten gegen eine neue Lauffläche erhalten kann.

Die Lauffläche kann vorteilhaft zugunsten einer hohen Traktionswirkung zumindest abschnittsweise Eigenschaften wie ein Rauhleder aufweisen, also rauhlederartig ausgestaltet sein, so dass sie dem Reinigungsfahrzeug einen sicheren Halt beim Befahren schräg geneigter Flächen verleiht, insbesondere auch auf glatten Glasflächen. Vorteilhaft kann die Lauffläche ein rauhes Echtleder, beispielsweise ein in praktischen Versuchen bewährtes Ziegenleder aufweisen, wobei die Lauffläche zumindest abschnittsweise oder vorteilhaft vollständig aus diesem rauhen Echtleder besteht.

Es hat sich in praktischen Versuchen herausgestellt, dass eine rauhlederartige Lauffläche im feuchten Zustand die besten Traktionseigenschaften aufweist, während sie in einem trockenen Zustand nicht den erwünschten Grip auf Glasflächen bietet. Je nach Neigung der zu reinigenden Oberfläche und je nach Fahrtrichtung des Reinigungsfahrzeugs kann zufällig eine Befeuchtung der Lauffläche erfolgen, indem das Reinigungsfahrzug durch das von der geneigten Oberfläche abfließende Wasser fährt. Dies kann beispielsweise bei Bergauffahrt der Fall sein, wenn die Reinigungsflüssigkeit vor dem Reinigungsfahrzeug ausgebracht wird und dann schwerkraftunterstützt bergab fließt, so dass das Reinigungsfahrzeug mit seinem Fahrwerk und den Laufflächen durch die ihm entgegenströmende Flüssigkeit fährt. Bei Bergabfahrt hingegen fährt das Reinigungsfahrzeug hinter der bergab fließenden Flüssigkeit her, so dass seine Laufflächen schnell austrocknen. Um unabhängig von derartigen Zufälligkeiten stets eine bestmögliche Traktionswirkung sicherzustellen, weist das Reinigungsfahrzeug vorzugsweise eine Befeuchtungseinrichtung auf, welche die rauhlederartigen Laufflächen befeuchtet. Dabei kann die Befeuchtungseinrichtung Düsen aufweisen, aus denen Feuchtigkeit auf die Laufflächen des Reinigungsfahrzeugs verrieselt oder gesprüht wird, z. B. das ohnehin zum Reinigungsfahrzeug zugeführte Wasser oder eine in einem eigenen Vorratstank bereitgehaltene Flüssigkeit.

Konstruktiv erheblich einfacher, leichtgewichtiger und wirtschaftlicher kann die Befeuchtungseinrichtung dadurch verwirklicht sein, dass sie als so genanntes Schwammtuch ausgestaltet ist, welches der Lauffläche auf deren inneren, von der zu reinigenden Oberfläche abgewandten Seite anliegt. Durch ihre rauhlederartige Ausgestaltung ermöglicht die Lauffläche einen Feuchtigkeitstransport von der nassen, zu reinigenden oder bereits gereinigten Oberfläche durch die Lauffläche hindurch bis zu dem Schwammtuch, so dass dieses mit seiner hohen Saugkraft eine große Feuchtigkeitsmenge aufnehmen und speichern kann. Fährt das Reinigungsfahrzeug anschließend auf einer vergleichsweise trockenen Oberfläche, so sorgt der gespeicherte Flüssigkeitsvorrat aufgrund einer kapillaren Saugwirkung der porösen, rauhlederartigen Laufflächen und aufgrund des Anpressdrucks, den das Eigengewicht des Reinigungsfahrzeugs bewirkt, für eine Flüssigkeitsabgabe vom Schwammtuch zur Lauffläche, so dass diese über eine lange Zeit bzw. über eine lange Wegstrecke traktionsfördernd feucht gehalten wird.

Zudem ist das Schwammtuch mit seinen elastisch nachgiebigen Eigenschaften eine vorteilhafte Unterlage für die Lauffläche: beim Überfahren von kleineren Unebenheiten ermöglicht das Schwammtuch eine punktuell nachgiebige Verformung der Lauffläche. Die Unebenheiten werden umschlossen, und rings um die Unebenheiten wird jeweils eine möglichst große Kontaktfläche beibehalten, mit welcher die Lauffläche Kontakt mit der befahrenen Oberfläche hat, so dass gute Traktionswerte beibehalten werden können.

Vorteilhaft können auf jeder Fahrzeugseite jeweils zwei Antriebsraupen hintereinander angeordnet sein, die unabhängig voneinander geführt und gefedert sind. Auf diese Weise kann das Reinigungsfahrzeug problemlos Hindernisse überwinden, wie sie beispielsweise durch metallische Trennstege auf den Glasdächern vorgesehen sind oder in Form von Lichtkuppeln o. dgl., ohne dass dabei eine Schrägstellung des Fahrzeugs erfolgt, die entweder zu einem instabilen Fahrverhalten führen würde oder die Übertragung der Antriebskräfte in Frage stellen würde.

Da das Fahrzeug ohnehin ferngesteuert ist, kann der Bediener auftretende Funktionsstörungen des Fahrzeugs möglicherweise nicht so schnell wahrnehmen, wie wenn er beispielsweise in einer Fahrerkabine das Fahrzeug selbst steuern würde. Daher kann vorteilhaft vorgesehen sein, dass die elektronische Steuerung einige Funktionen des Reinigungsfahrzeugs automatisch überwacht, beispielsweise mit Hilfe von Sensoren. Sollten dabei Fehlfunktionen erfasst werden, so kann vorteilhaft vorgesehen sein, dass die elektronische Steuerung eine entsprechende Fehlermeldung automatisch aussendet. So kann z. B. die Fehlermeldung auf dem Sender der Fernsteuerung angezeigt werden, also im Blickfeld des Bedieners des Reinigungsfahrzeugs. Vorteilhaft kann jedoch mittels der Fernsteuerungs-internen Kommunikation auf dem Sender der Fernsteuerung lediglich ein Signal angezeigt werden, dass eine Fehlermeldung übermittelt wurde. Die Übersendung der Fehlermeldung selbst erfolgt vorzugsweise über einen Kurzstreckenfunk, beispielsweise über das derzeit in der Praxis weit verbreitete Bluetooth-Funkverfahren. Auf diese Weise kann nämlich vorgesehen sein, dass die Fehlermeldung nicht innerhalb des Steuerungssystems des Reinigungsfahrzeugs übermittelt wird, sondern vielmehr an ein Mobiltelefon, wobei die derzeit handelsüblichen Mobiltelefone größtenteils mit einem Bluetooth-Funkmodul versehen sind. Auf diese Weise hat der Bediener des Reinigungsfahrzeugs die Möglichkeit, die auf seinem Mobiltelefon eingetroffene Fehlermeldung unmittelbar über das Mobiltelefon-Funknetz weltweit weiter zu versenden. Die Fehlermeldung kann beispielsweise an eine Zentrale des Reinigungsunternehmens oder direkt an den Hersteller des Reinigungsfahrzeugs weitergeleitet werden, so dass Wartungstipps innerhalb kürzester Zeit ausgetauscht werden können oder aber der Versand eines Ersatzteils unverzüglich veranlasst werden kann, so dass innerhalb kürzester Zeit ein defektes Reinigungsfahrzeug wieder einsatzfähig gemacht werden kann.

Insbesondere um schnelle Reparaturen am Einsatzort des Reinigungsfahrzeugs zu ermöglichen, kann das Reinigungsfahrzeug vorteilhaft modular ausgestaltet sein und beispielsweise in fünf separate Komponenten aufgeteilt sein, die jeweils ein Gewicht von höchstens 25 kg aufweisen und ein Packmaß aufweisen, welches dem internationalen Speditions-Standard für Luftfracht entsprechen. Diese fünf unterschiedlichen Komponenten können mit möglichst einfachen Mitteln demontiert werden, beispielsweise werkzeuglos, indem beispielsweise diese fünf Komponenten jeweils mit Bajonettverschlüssen, Rändelschrauben, Dauersplinten o. dgl. aneinander befestigt sind und dementsprechend innerhalb kürzester Zeit und werkzeuglos voneinander getrennt werden können.

Dies dient erstens einem Platz sparenden Transport des Reinigungsfahrzeugs durch den Betreiber des Reinigungsfahrzeugs selbst, falls das Reinigungsfahrzeug nicht einteilig von einem zum anderen Einsatzort transportiert werden soll.

Durch diese Zerlegbarkeit ergibt sich zweitens die Möglichkeit, das Reinigungsfahrzeug in einzelne Komponenten zu zerlegen, die problemlos von einer einzigen Person getragen werden können und beispielsweise in ein Transportfahrzeug verstaut werden können, um das Reinigungsfahrzeug dann zu einem anderen Einsatzort zu verbringen, wo es genauso schnell und problemlos von einer einzigen Person wieder zusammengesetzt werden kann.

Insbesondere im Zusammenhang mit der oben angesprochenen Möglichkeit, Fehlermeldungen möglichst verzögerungsarm an den Hersteller des Reinigungsfahrzeugs zu übermitteln, ergibt sich drittens eine vorteilhafte Möglichkeit, ein defektes Reinigungsfahrzeug innerhalb kürzester Zeit wieder betriebsbereit zu machen: Wenn außer der Fehlermeldung auch der Standort des Reinigungsfahrzeugs übermittelt wird, so kann von dem Betreiberunternehmen des Reinigungsfahrzeugs oder von der Herstellerfirma des Reinigungsfahrzeugs die betroffene der fünf Fahrzeugkomponenten als Austauschkomponente zum Einsatzort des Reinigungsfahrzeugs versandt werden. In der dabei verwendeten Transportverpackung kann die defekte Fahrzeugkomponente unmittelbar zurückgeschickt werden und analysiert bzw. gewartet bzw. repariert werden, so dass letztlich innerhalb von 24 oder 48 Stunden weltweit die Reinigungsfahrzeuge wieder einsatzfähig sein können.

In einer beispielhaften Aufteilung des Reinigungsfahrzeugs auf fünf Komponenten stellen die Fahrwerksteile der rechten und der linken Fahrzeugseite die erste und zweite Komponente des Reinigungsfahrzeugs dar. Als dritte Komponente ist die Zentraleinheit des Fahrzeugs vorgesehen, an welcher die Fahrwerkskomponenten befestigt werden und welche die Fahrzeugkarosserie sowie den Schlauch aufweist. Als vierte Fahrzeugkomponente ist die Reinigungseinrichtung vorgesehen, welche die Wasserdüsen sowie die eventuell vorhandene Bürste umfasst, also beispielsweise den gesamten so genannten Reinigungsbalken oder Bürstenbalken des Reinigungsfahrzeugs. Schließlich enthält die fünfte Komponente den Wassermotor, den elektrischen Generator sowie die elektronische Steuerung des Reinigungsfahrzeugs.

Ein Ausführungsbeispiel der Erfindung wird anhand der rein schematischen Darstellung nachfolgend näher erläutert.

Dabei ist mit 1 insgesamt ein Reinigungsfahrzeug bezeichnet, welches eine Zentraleinheit 2 aufweist, an welcher auf beiden Seiten jeweils zwei Antriebsraupen 3 vorgesehen sind und welches nach vorne hin eine Reinigungseinrichtung 4 in Form eines Bürstenbalkens aufweist, in welchem eine Bürste 5 sowie Sprühdüsen für den Austritt der Reinigungsflüssigkeit vorgesehen sind.

Im hinteren Bereich der Zentraleinheit 2 ist eine Schlauchtrommel 6 mit einem Schlauch 7 vorgesehen, der als Hochdruckschlauch ausgestaltet ist. Die Schlauchtrommel 6 ist mit einer Abzugssicherung ausgestaltet, so dass eine maximale Abzugsgeschwindigkeit des Schlauchs 7 von der Schlauchtrommel 6 bestimmt ist, bei deren Erreichen bzw. Überschreiten die Abzugssicherung anspricht und die Schlauchtrommel 6 automatisch blockiert wird.

Jede Antriebsraupe 3 ist unabhängig von den drei anderen Antriebsraupen 3 geführt und gefedert. Jede Antriebsraupe 3 weist zwei Räder 8 mit Tragkränzen 11 auf sowie ein um die beiden Tragkränze 11 der Räder 8 umlaufendes Band 9, wobei das Band 9 innenseitig sowie die Räder 8 außenseitig jeweils mit einer Bogenverzahnung ausgestaltet sind, um das Band 9 stets selbst zentrierend auf den Rädern 8 zu führen. An seinem äußeren Umfang weist jedes Band 9 eine Lauffläche 10 auf, die als auswechselbares Element des auf diese Weise zweiteiligen Bandes 9 ausgestaltet ist. So können je nachdem, welcher Untergrund befahren werden soll, unterschiedliche Laufflächen 10 montiert werden oder je nachdem, ob der Reinigungsflüssigkeit bestimmte Reinigungszusätze zugesetzt werden, so dass an diese Zusammensetzung der Reinigungsflüssigkeit angepasste Laufflächen verwendet werden, die einen optimalen Halt des Reinigungsfahrzeugs 1 auf dem zu befahrenden Untergrund, beispielsweise auch auf Schrägflächen sicherstellen.

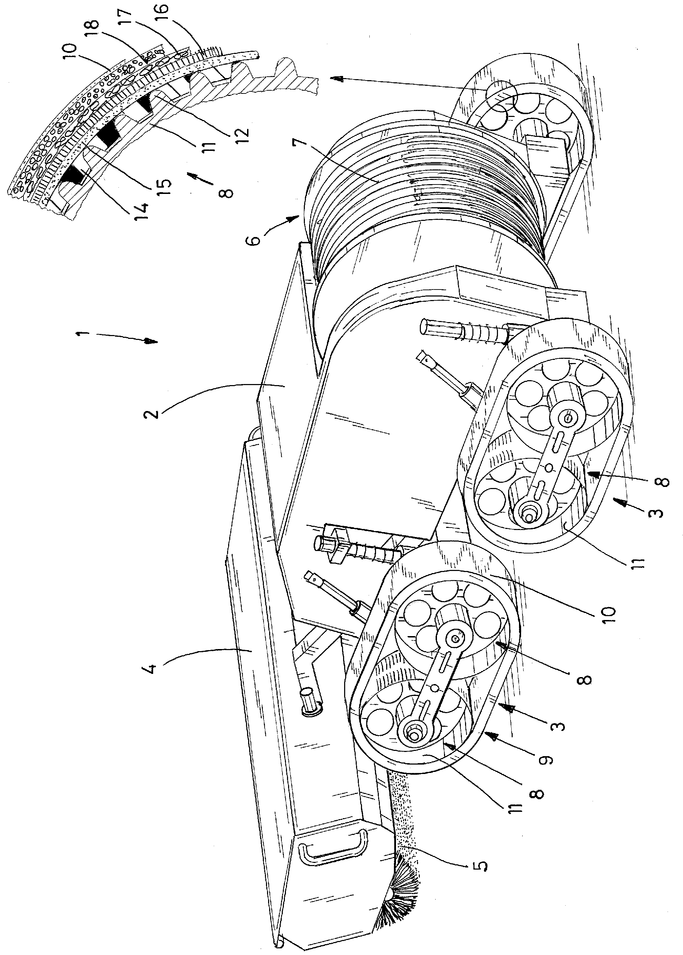

Wie aus dem vergrößerten Ausschnitt der Zeichnung ersichtlich ist, weisen die Tragkränze 11 der Räder 8 eine Außenverzahnung in Form von Radzähnen 12 auf, die mit einer Innenverzahnung in Form von Bandzähnen 14 der Bänder 9 kämmt. Die Bänder 9 sind mehrschichtig aufgebaut: eine Lastschicht 15 ist auf ihrer Innenseite mit den Bandzähnen 14 versehen und überträgt die Antriebskräfte. Auf ihrer Außenseite ist die Lastschicht 15 mit einem Teil eines Haftverschlusses versehen, nämlich mit dem so genannten Häkchenteil 16. Die Lastschicht 15 stellt den dauerhaften Teil des Bandes 9 dar, der über eine lange Zeit und gegebenenfalls über dessen gesamte Lebensdauer an dem Reinigungsfahrzeug 1 montiert bleiben kann.

Im Unterschied dazu ist ein zweiter Teil des Bandes 9 als schnell auswechselbarer Teil ausgestaltet, der bei Verschleiß, Verschmutzung oder in Anpassung an unterschiedliche Betriebsbedingungen wie das Material der zu reinigenden Oberfläche oder wie die Zusammensetzung der verwendeten Reinigungsflüssigkeit ausgewechselt werden kann. Dieser auswechselbare Teil des Bandes 9 weist ein Flauschband 17 als den zweiten Teil des Haftverschlusses auf, so dass mittels dieses Flauschbandes 17 der auswechselbare Teil des Bandes 9 schnell und werkzeuglos von der auf den Rädern 8 verbleibenden Lastschicht 15 getrennt oder mit ihr verbunden werden kann.

Das Flauschband 17 ist mit einem Schwammtuch 18 und der äußeren Lauffläche 10 vernäht. Die Lauffläche 10 besteht aus einem Ziegenverloursleder, und das Schwammtuch 18 dient als Befeuchtungseinrichtung, die eine lang anhaltende Versorgung der Lauffläche 10 mit Feuchtigkeit und somit lang anhaltende, hervorragende Traktionseigenschaften des Reinigungsfahrzeugs 1 auch auf glattem Untergrund wie z. B. auf einer nassen oder auch trockenen Glasfläche sicherstellt.

Die Reinigungseinrichtung 4 ist an zwei Hubarmen gehalten, die in der Zentraleinheit 2 um eine liegende Achse schwenkbar gelagert sind, so dass die Reinigungseinrichtung 4 gegenüber der Zentraleinheit 2 angehoben oder abgesenkt werden kann.

Die Fahrtrichtung des Reinigungsfahrzeugs 1 kann durch unterschiedlich schnellen Antrieb der Antriebsraupen 3 rechts und links der Zentraleinheit 2 beeinflusst werden, ebenso die Fahrgeschwindigkeit des Reinigungsfahrzeugs 1 insgesamt. Hierzu ist innerhalb der Zentraleinheit 2 eine elektronische Steuerung vorgesehen, die einen Empfänger einer Funkfernsteuerung umfasst und die Steuersignale an die betreffenden Aktuatoren weiterleitet, beispielsweise an elektrische Antriebsmotoren für das Fahrwerk und die Reinigungseinrichtung 4.

## Patentansprüche

1. Reinigungsfahrzeug,
mit einem Fahrmotor,
einem durch den Fahrmotor angetriebenen Fahrwerk, und einer Reinigungseinrichtung, welche eine Reinigungsflüssigkeit auf eine zu reinigende Oberfläche aufbringt, **dadurch gekennzeichnet,**
**dass** das Reinigungsfahrzeug (1) eine elektronische Steuerung aufweist, welche einen Empfänger einer Fernsteuerung umfasst,
wobei Fahr- und Reinigungsfunktionen des Reinigungsfahrzeugs (1) mittels der Fernsteuerung und der fahrzeugseitigen elektronischen Steuerung beeinflussbar sind, und eine als Schlauchtrommel (6) bezeichnete Aufnahme für einen Schlauch (7) aufweist,
wobei durch den Schlauch (7) Wasser zu dem Reinigungsfahrzeug (1) zugeführt ist,
und wobei das Reinigungsfahrzeug (1) einen mit dem Wasser betriebenen, als Wassermotor bezeichneten Hydraulikmotor aufweist,
wobei der Wassermotor zum Antrieb des Fahrwerks dient und das dem Wassermotor zugeführte Wasser einen als ersten Wasserdruck bezeichneten Druck aufweist,
und wobei das aus dem Wassermotor austretende Wasser als Reinigungsflüssigkeit zu der Reinigungseinrichtung (4) geführt ist, wobei das Wasser stromabwärts von dem Wassermotor einen als zweiten Wasserdruck bezeichneten Druck aufweist, der niedriger ist als der erste Wasserdruck, der stromaufwärts von dem Wassermotor herrscht.

2. Reinigungsfahrzeug nach Anspruch 1,
**dadurch gekennzeichnet,**
**dass** der Wassermotor einen elektrischen Generator antreibt,
und der Fahrmotor als Elektromotor ausgestaltet ist, der mit der vom Generator erzeugten Energie angetrieben ist.

3. Reinigungsfahrzeug nach Anspruch 1 oder 2,
**dadurch gekennzeichnet,**
**dass** der Wassermotor einen elektrischen Generator antreibt,
und das Reinigungsfahrzeug (1) eine elektronische Steuerung aufweist, die mit der vom elektrischen Generator erzeugten Energie betrieben ist.

4. Reinigungsfahrzeug nach einem der vorhergehenden Ansprüche,
**dadurch gekennzeichnet,**
**dass** der Schlauch (7) als Hochdruckschlauch ausgestaltet ist und das Wasser darin einen Druck von wenigstens 80 bar aufweist.

5. Reinigungsfahrzeug nach einem der vorhergehenden Ansprüche,
**dadurch gekennzeichnet,**
**dass** der Schlauch (7) eine Zugfestigkeit aufweist, die höher als das Gewicht des Reinigungsfahrzeugs (1) ist, und dass am Reinigungsfahrzeug (1) der Schlauch (7) in Art einer Zugentlastung verlegt ist, welche eine dem Gewicht des Reinigungsfahrzeugs (1) entsprechende, auf den Schlauch (7) einwirkende Zugkraft aufzunehmen in der Lage ist.

6. Reinigungsfahrzeug nach einem der vorhergehenden Ansprüche,
**dadurch gekennzeichnet,**
**dass** an die elektronische Steuerung eine Einrichtung zur Erfassung der Schlauchspannung sowie die Schlauchtrommel (6) angeschlossen ist,
die Schlauchtrommel (6) motorisch drehangetrieben ist,
und die Schlauchtrommel (6) von der elektronischen Steuerung derart angesteuert ist, dass die Schlauchtrommel (6) automatisch den Schlauch (7) aufwickelnd angetrieben ist, wenn die erfasste Schlauchspannung einen vorbestimmten Wert unterschreitet.

7. Reinigungsfahrzeug nach einem der vorhergehenden Ansprüche,
**dadurch gekennzeichnet,**
**dass** die Reinigungseinrichtung (1) Sprühdüsen für den Wasseraustritt aufweist sowie eine bewegliche Bürste (5), wobei die Bürste (5) motorisch angetrieben ist.

8. Reinigungsfahrzeug nach einem der vorhergehenden Ansprüche,
**dadurch gekennzeichnet,**
**dass** das Fahrwerk auf jeder Seite des Fahrzeugs wenigstens eine Antriebsraupe (3) aufweist,
mit einem um wenigstens zwei Räder (8) umlaufenden Band (9),
wobei wenigstens ein Rad je Raupe angetrieben ist.

9. Reinigungsfahrzeug nach Anspruch 7,
**dadurch gekennzeichnet,**
**dass** die Räder (8) außen bogenverzahnt sind und das Band (9) innen eine dazu komplementäre Verzahnung aufweist.

10. Reinigungsfahrzeug nach Anspruch 7 oder 8,
**dadurch gekennzeichnet,**
**dass** auf jeder Fahrzeugseite zwei Antriebsraupen (3) angeordnet sind, die unabhängig voneinander geführt und gefedert sind.

11. Reinigungsfahrzeug nach einem der vorhergehenden Ansprüche,
**dadurch gekennzeichnet,**
**dass** die elektronische Steuerung sensorisch die Funktionen des Reinigungsfahrzeugs (1) überwachend ausgestaltet ist,
und **dass** eine Kurzstrecken-Funkeinrichtung - wie eine Bluetooth-Funkeinrichtung - vorgesehen ist, welche eine von der elektronischen Steuerung erzeugte Fehlermeldung automatisch aussendet.

12. Reinigungsfahrzeug nach einem der vorhergehenden Ansprüche,
**dadurch gekennzeichnet,**
**dass** das gesamte Reinigungsfahrzeug (1) in mehrere modulare Komponenten unterteilt ist.

13. Reinigungsfahrzeug nach Anspruch 12,
**dadurch gekennzeichnet,**
**dass** das Reinigungsfahrzeug (1) in die folgenden Komponenten eingeteilt ist:
■ die Fahrwerksteile der rechten Fahrzeugseite,
■ die Fahrwerksteile der linken Fahrzeugseite,
■ ein zentrales Fahrzeugmodul, welches die Fahrzeugkarosserie sowie den Schlauch aufweist,
■ die Reinigungseinrichtung mit Wasserdüsen und einer eventuell vorhandenen Bürste, und
■ der Wassermotor, ein elektrischer Generator sowie die elektronische Steuerung.

14. Reinigungsfahrzeug nach Anspruch 12 oder 13,
**dadurch gekennzeichnet,**
**dass** jede Komponente ein Gewicht von höchstens 25 kg aufweist.

15. Reinigungsfahrzeug nach einem der vorhergehenden Ansprüche,
**dadurch gekennzeichnet,**
**dass** das Fahrwerk eine rauhlederartige Lauffläche aufweist, die mit der zu reinigenden Oberfläche in Kontakt kommt,
und **dass** eine die Lauffläche befeuchtende Befeuchtungseinrichtung vorgesehen ist.

16. Reinigungsfahrzeug nach Anspruch 15,
**dadurch gekennzeichnet,**
**dass** die Befeuchtungseinrichtung als so genanntes Schwammtuch ausgestaltet ist, welches der Lauffläche auf deren inneren, von der zu reinigenden Oberfläche abgewandten Seite anliegt.

17. Reinigungsfahrzeug nach Anspruch 15 oder 16,
**dadurch gekennzeichnet,**
**dass** die Lauffläche ein rauhes Ziegenleder aufweist.
